(19) Europäisches Patentamt
European Patent Office
Office européen des brevets

(11) **EP 2 943 618 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(21) Anmeldenummer: **14700147.3**

(22) Anmeldetag: **07.01.2014**

(51) Int Cl.:
*E02D 3/074* (2006.01)    *E01C 19/38* (2006.01)
*E02F 3/96* (2006.01)

(86) Internationale Anmeldenummer:
**PCT/EP2014/050128**

(87) Internationale Veröffentlichungsnummer:
**WO 2014/108389 (17.07.2014 Gazette 2014/29)**

(54) **VERFAHREN ZUM BETREIBEN EINES ANBAUVERDICHTERS, SOWIE SPEICHERMEDIUM UND ANBAUVERDICHTER**

METHOD FOR OPERATING AN ATTACHED COMPACTOR, STORAGE MEDIUM AND ATTACHED COMPACTOR

PROCÉDÉ POUR FAIRE FONCTIONNER UN COMPACTEUR ADAPTABLE, SUPPORT D'ENREGISTREMENT ET COMPACTEUR ADAPTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2013 DE 102013200274**

(43) Veröffentlichungstag der Anmeldung:
**18.11.2015 Patentblatt 2015/47**

(73) Patentinhaber: **MTS Maschinentechnik Schrode AG**
**72534 Hayingen (DE)**

(72) Erfinder:
• **NOHLEN, Ulrike**
**72531 Hohenstein (DE)**
• **SCHRODE, Rainer**
**88529 Zwiefalten (DE)**
• **SPLITTGERBER, Manuel**
**72525 Münsingen (DE)**

(74) Vertreter: **DREISS Patentanwälte PartG mbB**
**Friedrichstrasse 6**
**70174 Stuttgart (DE)**

(56) Entgegenhaltungen:
**EP-A2- 2 243 881       DE-A1-102008 010 461**
**DE-U1-202004 015 141**

## Beschreibung

Die Erfindung betrifft ein Verfahren zum Betreiben eines Anbauverdichters nach dem Oberbegriff des Anspruchs 1, sowie ein Speichermedium und einen Anbauverdichter nach den Oberbegriffen der nebengeordneten Patentansprüche.

Anbauverdichter sind beispielsweise aus der DE 10 2009 018 490 A1 und der DE 10 2008 006 211 A1 bekannt. Sie werden als Baggerzusatzgerät insbesondere im Graben- und Rohrleitungsbau verwendet. In Verbindung mit Schnellwechseleinrichtungen und Drehköpfen bieten sie als kostengünstiges Wechselgerät ein erhebliches Potential zur Kosteneinsparung und zur Erhöhung der Arbeitssicherheit, weil der Aufenthalt von Menschen zu Verdichtungsarbeiten in Gräben und Gruben entfallen kann.

Das DE 203 07 434 U1 offenbart einen Anbauverdichter, der eine nicht näher definierte Messeinrichtung zur Feststellung des Verdichtungszustands des Bodens aufweist, damit eine Kontrolle möglich ist, ob das bearbeitete Erdreich bereits den erforderlichen Verdichtungsgrad aufweist oder erneut bearbeitet werden muss. US 5,695,298 beschreibt keinen Anbauverdichter, sondern einen Walzenverdichter. Für einen solchen Walzenverdichter wird vorgeschlagen, die Erregung eines Vibrationskörpers so zu steuern, dass eine harmonische Schwingungskomponente, die eine Frequenz aufweist, die halb so groß ist wie die Erregerfrequenz, in einem vorgegebenen Verhältnis zur Gesamtschwingung steht. Letztlich wird bei diesem Walzenverdichter die Vibration also abhängig von einer einen Klirrfaktor charakterisierenden Größe ermittelt. Die DE 10 2008 010 461 A1 beschreibt ein Verfahren zur Einstellung und/oder Begrenzung der Anpresskraft eines an einen Baggerarm angebauten Anbauverdichters. Das DE 20 2004 015 141 U1 beschreibt einen Bodenverdichter, bei dem zur Ermittlung des Verdichtungsgrades ein Sensor vorgesehen ist, der die Beschleunigung einer Bodenplatte erfasst.

Aufgabe der vorliegenden Erfindung ist es, ein Verfahren bereit zu stellen, welches einen wirtschaftlicheren Betrieb eines ein schwingendes Unterteil aufweisenden Anbauverdichters ermöglicht.

Diese Aufgabe wird durch ein Verfahren mit den Merkmalen des Anspruchs 1 sowie ein Speichermedium und einen Anbauverdichter mit den Merkmalen der nebengeordneten Patentansprüche gelöst. Vorteilhafte Weiterbildungen der Erfindung sind in Unteransprüchen angegeben. Für die Erfindung wichtige Merkmale finden sich darüber hinaus in der nachfolgenden Beschreibung und in der Zeichnung, auch ohne dass hierauf nochmals im Detail hingewiesen wird.

Konkret wird vorgeschlagen, dass im stationären, also ortsfesten Betrieb eines Anbauverdichters mit einem schwingenden Unterteil ein Ende einer möglichen Verdichtung durch ein entsprechendes Signal angezeigt wird. Das erfindungsgemäße Verfahren gestattet es also dem Benutzer, jenen Zeitpunkt zu erkennen, zu dem ein weiterer Betrieb des Anbauverdichters zu keiner oder zumindest keiner wesentlichen weiteren Verdichtung des Bodens führt. Die Erfindung kann daher unter dem Stichwort der "Verdichtungsendeerkennung" zusammengefasst werden. Indem der besagte Zeitpunkt erkannt wird, kann ein unnötiger und somit unwirtschaftlicher Betrieb des Anbauverdichters vermieden werden. Die Bodenverdichtung wird daher beschleunigt, da schneller zum nächsten Einsatzort des Anbauverdichters vorangegangen werden kann. Darüber hinaus wird die Lebensdauer des Anbauverdichters erhöht, da ein unnötiger Betrieb vermieden wird, und da ein verschleißfördernder Betrieb auf bereits maximal verdichtetem Grund vermieden wird.

Die Erfindung macht sich die Erkenntnis zu Nutze, dass eine Größe, welche einen Verdichtungszustand charakterisieren kann, beispielsweise ein Klirrfaktor oder eine diesen charakterisierende oder diesem entsprechende Größe, dann zeitlich im Wesentlichen konstant wird, wenn der Boden seinen Zustand einer maximal möglichen Verdichtung erreicht hat, dass diese Größe sich jedoch mit sich noch verändernder Verdichtung ebenfalls ändert. Erfindungsgemäß wird daher vorgeschlagen, die zeitliche Veränderung einer Größe, welche einen Verdichtungszustand bzw. Klirrfaktor charakterisiert oder einem solchen entspricht, zu überwachen, indem diese mit einem Grenzwert (der nahe Null liegen dürfte) verglichen wird. Erreicht die zeitliche Veränderung der Größe den Grenzwert, kann davon ausgegangen werden, dass ein Zustand einer maximal möglichen Verdichtung am aktuellen Einsatzort des Anbauverdichters erreicht ist, so dass eine entsprechende Aktion veranlasst werden kann. Diese Aktion kann darin bestehen, dass der Anbauverdichter automatisch abgeschaltet wird, sie kann aber auch nur darin bestehen, dass dem Maschinenführer ein entsprechender Hinweis übermittelt wird.

Konkret wird ein Verfahren zum Betreiben eines Anbauverdichters mit einem schwingenden Unterteil vorgeschlagen, welches folgende Schritte umfasst:

     a. Erfassen einer ersten Größe, welche die Schwingungen des schwingenden Unterteils charakterisiert;
     b. Ermitteln einer zweiten Größe, welche einen Verdichtungszustand charakterisieren kann, aus der im Schritt a erfassten ersten Größe;
     c. Ermitteln einer dritten Größe, welche eine zeitliche Veränderung der im Schritt b ermittelten zweiten Größe charakterisiert;
     d. Vergleichen der im Schritt c ermittelten dritten Größe mit einem Grenzwert; und
     e. Veranlassen einer Aktion abhängig vom Ergebnis des Vergleichs.

Der eingangs erwähnte Begriff des "Klirrfaktors" ist dabei nicht einschränkend zu verstehen. Jegliche Größe, die sich mit zunehmendem Grad der Verdichtung verändert und sich nicht mehr ändert, wenn auch der Grad der Verdichtung nicht mehr zunimmt, kann als eine einen Verdichtungszustand bzw. Klirrfaktor charakterisierende Größe verwendet werden. Hierzu gehört neben dem klassischen "Klirrfaktor" beispielsweise auch eine "Gesamte Harmonische Verzerrung" oder Ähnliches, wobei es in der Fachwelt sowohl für den Klirrfaktor als auch die Gesamte Harmonische Verzerrung eine ganze Reihe im Detail unterschiedlicher Definitionen gibt. Außerdem versteht es sich, dass eine der Grundlagen des erfindungsgemäßen Verfahrens die Tatsache ist, dass die Verdichtung mit einem Anbauverdichter mit einem schwingenden Unterteil, beispielsweise in Form einer Verdichterplatte, örtlich "stationär" erfolgt, also zunächst eine erste Fläche bzw. der darunter liegende Rauminhalt bis zum Erreichen des maximalen Verdichtungsgrads verdichtet wird, dann eine nächste Fläche bzw. der darunter liegende Rauminhalt verdichtet wird, und so weiter.

Bemerkenswert ist dabei ferner, dass das erfindungsgemäße Verfahren angewendet werden kann, auch wenn die Last, mit der das Tragfahrzeug (beispielsweise ein Baggerarm eines Baggers) den Anbauverdichter auf den Boden drückt, nicht bekannt ist. Der Grund hierfür ist, dass zwar der Absolutwert beispielsweise des Klirrfaktors von der besagten Last abhängig ist, nicht jedoch dessen zeitliche Veränderung mit zunehmendem Grad der Verdichtung.

In einer Weiterbildung des erfindungsgemäßen Verfahrens wird vorgeschlagen, dass im Schritt d des Verfahrens, bei dem die im Schritt c ermittelte dritte Größe mit einem Grenzwert verglichen wird, diese dritte Größe mit einem Grenzwert verglichen wird und im Schritt e dann, wenn der Grenzwert erreicht und/oder unterschritten wird, ein von einem Benutzer wahrnehmbares Signal erzeugt wird. Diese Weiterbildung bietet sich insbesondere dann an, wenn als zweite Größe ein Klirrfaktor oder eine Gesamte Harmonische Verzerrung verwendet wird. Der Grenzwert dürfte dabei in der Praxis sich nur wenig von Null unterscheiden, da eine zeitliche Veränderung von Null bedeutet, dass keinerlei weitere Verdichtung erzielt wird. Das Erzeugen eines vom Benutzer wahrnehmbaren Signals gestattet es dem Benutzer, frei zu entscheiden, ob aus bestimmten Gründen dennoch der Anbauverdichter weiter betrieben werden, beispielsweise ohne Ausschalten einfach an eine nächste Verdichtungsstelle versetzt werden soll. Es versteht sich, dass dann, wenn für die dritte Größe eine inverse Größe verwendet wird, kein Unterschreiten sondern ein Überschreiten des Grenzwerts zu prüfen ist.

Dabei kann das Signal akustisch, optisch und/oder haptisch wahrnehmbar sein. Im einfachsten Fall ist das Signal einfach ein Lichtsignal mittels einer Lampe oder ein Tonsignal mittels eines Lautsprechers oder ein Vibrationssignal an einem Bediengriff, mit dem der Benutzer den Anbauverdichter steuert. Das Signal kann dabei direkt am Anbauverdichter erzeugt werden oder in einem Führerstand des Tragfahrzeugs, an welches der Anbauverdichter angebaut ist. In dem letztgenannten Fall ist denkbar, dass vom Anbauverdichter an das Tragfahrzeug eine drahtlose Datenübertragung beispielsweise mittels Funk oder Infrarot erfolgt.

Ferner wird vorgeschlagen, dass dann, wenn der Grenzwert nicht erreicht wird, aus der ersten Größe eine aktuelle Frequenz des schwingenden Unterteils ermittelt und dem Benutzer angezeigt wird.

Erfindungsgemäß kann das Verfahren zusätzlich folgende Schritte umfassen: Vergleichen der im Schritt b ermittelten zweiten Größe mit einem Grenzwert; Aussetzen der Verarbeitung der Schritte c bis e, solange die zweite Größe kleiner ist als der Grenzwert. Diese Weiterbildung kann unter dem Stichwort der "Leerlauferkennung" zusammengefasst werden.

Ein Leerlaufzustand liegt dann vor, wenn der Anbauverdichter zwar in Betrieb ist, also der Exzenterantrieb angetrieben wird, aber das schwingende Unterteil nicht auf dem zu verdichtenden Boden aufsitzt. Dies ist beispielsweise während eines Versetzens des Anbauverdichters von einer Verdichtungsfläche zur nächsten der Fall. Bei abgehobenem Anbauverdichter findet selbstverständlich keine Bodenverdichtung statt, so dass die im Schritt c des erfindungsgemäßen Verfahrens ermittelte Größe zwingenderweise mindestens im Wesentlichen gleich Null ist. Um zu verhindern, dass hieraus auf ein vermeintliches Verdichtungsende geschlossen wird, wird dieser Zustand mit den hier vorgeschlagenen zusätzlichen Verfahrensschritten erkannt und die Anzeige eines vermeintlichen Verdichtungsendes unterdrückt.

Dem liegt die physikalische Erkenntnis zugrunde, dass im Leerlauf die Schwingungen des schwingenden Unterteils im Wesentlichen der harmonischen Schwingung des Exzenterantriebs entsprechen, also kaum Oberschwingungen aufweisen. Ein Klirrfaktor oder eine gesamte harmonische Verzerrung sind in diesem Falle recht groß. Mit dieser erfindungsgemäßen Weiterbildung kann ein Leerlauf zuverlässig erkannt werden, wie er beispielsweise auch bei einem Abheben des Anbauverdichters vom Boden zu Reinigungszwecken vorliegt. Auch hier versteht sich, dass dann, wenn für die dritte Größe eine inverse Größe verwendet wird, kein Unterschreiten sondern ein Überschreiten des Grenzwerts zu prüfen ist.

Die zweite Größe kann besonders einfach unter Verwendung einer Fourieranalyse ermittelt werden.

Eine Weiterbildung des erfindungsgemäßen Anbauverdichters zeichnet sich dadurch aus, dass der Anbauverdichter einen Energieerzeuger zur Speisung mindestens des Sensors aufweist, der mindestens mittelbar von einem Antriebsmotor des Exzenterantriebs angetrieben wird. Ein solcher Energieerzeuger kann beispielsweise ein klassischer Generator sein, der mit einer Welle des hydraulischen Antriebsmotors gekoppelt ist. Möglich ist aber auch der Einsatz sogenannter "Energy Harvester", die aus den Schwingungen des schwingenden Unterteils Energie erzeugen.

Nachfolgend wird die Erfindung unter Bezugnahme auf die beiliegende Zeichnung beispielhaft erläutert. In der Zeichnung zeigen:

Figur 1 eine Seitenansicht eines Anbauverdichters und eines Baggers;
Figur 2 ein Diagramm, in dem die Amplitude einer Grundschwingung und von zwei Oberschwingungen eines schwingenden Unterteils in Form einer Verdichterplatte des Anbauverdichters von Figur 1 über der Zeit aufgetragen sind; und
Figur 3 ein Flussdiagramm eines Verfahrens zum Betreiben des Anbauverdichters von Figur 1.

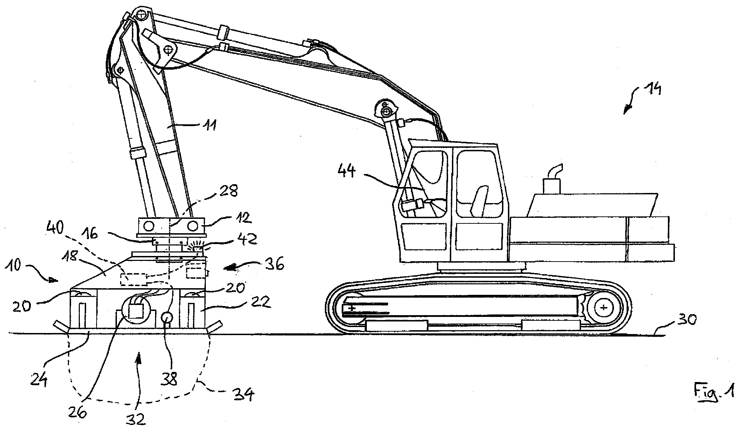

Ein Anbauverdichter trägt in Figur 1 insgesamt das Bezugszeichen 10. Er ist über eine hydraulische Schnellwechseleinrichtung 12 mit einem Arm 11 eines Baggers 14 verbunden.

Der Anbauverdichter 10 umfasst in Figur 1 unterhalb vom Schnellwechsler 12 eine Drehvorrichtung 16. Deren Unterseite ist mit einem Oberteil 18 verbunden, welches über elastische Koppelelemente 20 mit einem Unterteil 22 verbunden ist.

Das Unterteil 22 umfasst wiederum ein schwingendes Unterteil in Form einer Verdichterplatte 24, auf der eine Exzentereinrichtung 26 angeordnet ist. Diese umfasst einen nicht näher dargestellten hydraulischen Antriebsmotor, der über eine senkrecht zur Zeichnungsebene der Figur verlaufende Welle mit einer gegenüber der Wellenachse exzentrisch angeordneten Masse verbunden ist. Ferner weist die Exzentereinrichtung 26 einen Generator auf, welcher elektrische Energie für Komponenten des Anbauverdichters 10 bereitstellt.

Über den Schnellwechsler 12 wird der Anbauverdichter nicht nur mechanisch mit dem Arm 11 des Baggers 14 verbunden, sondern auch mit den hydraulischen Versorgungsleitungen des Baggers 14. Über diese wird zum Einen die Drehvorrichtung 16 und zum Anderen die Exzentereinrichtung 26 angesteuert. Durch die Drehvorrichtung 16 können im Betrieb des Anbauverdichters 10 Oberteil 18 und Unterteil 22 um eine zur Ebene der Verdichterplatte 24 orthogonale Drehachse 28 verdreht werden. Durch einen Betrieb der Exzentereinrichtung 26 wird auf die Verdichterplatte 24 eine sinusförmige und zur Ebene der Verdichterplatte 24 orthogonale Kraftkomponente erzeugt. Indem der Maschinenführer den Anbauverdichter 10 in Betrieb nimmt und über den Baggerarm 11 auf einen zu verdichtenden Boden 30 an einer Stelle 32 drückt, wird der unterhalb von der Verdichterplatte 24 liegende Raumbereich 34 verdichtet.

Besonders im Kanalbau, im Erdbau sowie bei Hinterfüllungen kommt der in Figur 1 dargestellte Anbauverdichter 10 zum Einsatz. In diesen Benutzungssituationen ist es besonders wichtig, einen bestimmten Verdichtungsgrad des Raumbereichs 34 sicher zu stellen. Oft ist dabei eine maximal mögliche Verdichtung gewünscht. Oft werden zudem bei diesen Einsatzszenarien Böden verwendet, die beispielsweise für den Straßenoberbau nicht verwendbar sind, beispielsweise nicht frostsichere und wenig scherfeste Böden, insbesondere feinkörnige und gemischtkörnige bindige Böden, sowie Steinschüttungen.

Um dem Maschinenführer des als Tragfahrzeug fungierenden Baggers 14 anzuzeigen, dass ein wenigstens im Wesentlichen maximal möglicher Verdichtungszustand in dem Raumbereich 34 erreicht ist, verfügt der Anbauverdichter 10 über eine Vorrichtung, welche dem Maschinenführer anzeigt, wenn die besagte maximal mögliche Verdichtung erreicht ist. Diese Vorrichtung trägt in Figur 1 insgesamt das Bezugszeichen 36.

Sie umfasst einen Sensor 38, der mit der Verdichterplatte 24 starr gekoppelt ist, und mit dem die Amplitude und Frequenz der Schwingungen der Verdichterplatte 24 in einer Richtung orthogonal zur Ebene der Verdichterplatte 24 erfasst werden können. Die Vorrichtung 36 umfasst ferner eine elektronische Verarbeitungseinrichtung 40, die bei der vorliegenden Ausführungsform im Bereich des Oberteils 18 des Anbauverdichters 10 angeordnet ist, und die das Signal des Sensors 38 erhält und gemäß einem weiter unten im Detail beschriebenen Verfahren verarbeitet (bei einer nicht gezeigten Ausführungsform ist die Verarbeitungseinrichtung 40 im Unterteil 22 angeordnet). Hierzu verfügt die Verarbeitungseinrichtung 40 über ein Speichermedium, auf dem ein Computerprogramm gespeichert ist, welches zur Ausführung des besagten Verfahrens programmiert ist. Elektrische Energie bezieht die Verarbeitungseinrichtung 40 von dem oben erwähnten Generator der Exzentereinrichtung 26. Zur Vorrichtung 36 gehört ferner eine Anzeigelampe 42, die auf der Oberseite des Oberteils 18 befestigt und mit der Verarbeitungseinrichtung 40 verbunden ist.

Bei einer nicht dargestellten Ausführungsform ist lediglich der Sensor 38 der Vorrichtung am Anbauverdichter 10 angeordnet. Die Verarbeitungseinrichtung 40 dagegen ist ebenso wie die Anzeigelampe 42 direkt im Führerstand 44 des Baggers 14 angeordnet. Das Signal des Sensors 38 wird in diesem Falle drahtlos zur Verarbeitungseinrichtung 40 übertragen.

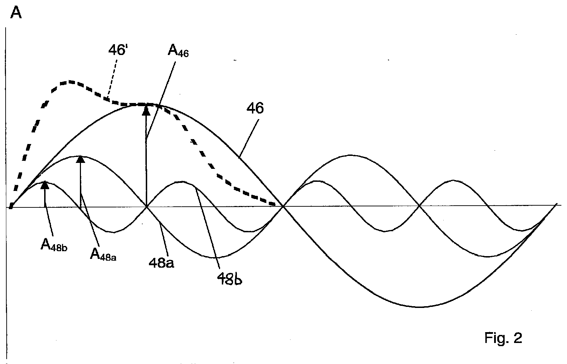

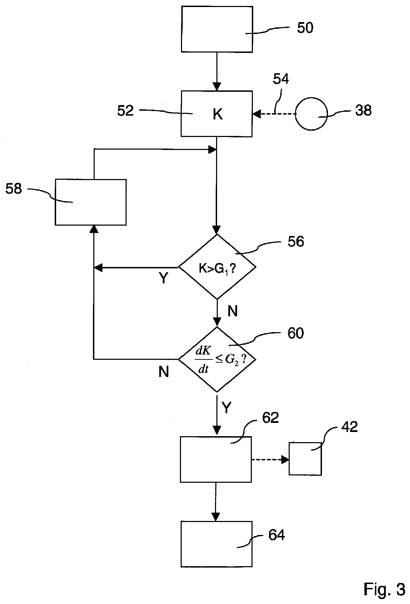

Das Verfahren, nach dem die Vorrichtung 36 arbeitet und welches in der Verarbeitungseinrichtung 40 gemäß dem abgespeicherten Computerprogramm ausgeführt wird, wird nun im Detail unter Bezugnahme auf die beiliegenden Figuren 2 und 3 erläutert.

In Figur 2 ist mit dem Bezugszeichen 46 der sinusförmige Verlauf der Grundschwingung der Verdichterplatte 24 für eine vollständige Periode aufgetragen. Die Ordinate gibt dabei die Amplitude A, die Abszisse den Zeitverlauf t wieder. Diese Grundschwingung 46 liegt vor, wenn der Anbauverdichter 10 ohne Last betrieben wird, also beispielsweise ohne dass er mit dem Baggerarm 11 auf den Boden 30 gedrückt wird. Eine Amplitude der Grundschwingung 46 ist in Figur 2 mit $A_{46}$ bezeichnet.

Wird der Anbauverdichter 10 mittels des Baggerarms 11 auf den Boden 30 gedrückt, um den unterhalb von der Verdichterplatte 24 liegenden Raumbereich 34 zu verdichten, verändert sich das Schwingungsverhalten der Verdichterplatte 24. Anstelle der harmonischen Grundschwingung 46 liegt nun eine verzerrte Grundschwingung 46' vor, die in Figur 2 für eine halbe Periode beispielhaft durch eine gestrichelte Linie dargestellt ist. Diese verzerrte Grundschwingung 46' kann beispielsweise mittels einer Fourieranalyse wiederum in die harmonische Grundschwingung 46 und mehrere harmonische Oberschwingungen 48i (i = a, b, c, ...) aufgeteilt werden. In Figur 2 ist dies beispielhaft für die ersten beiden Oberschwingungen 48a und 48b dargestellt. Die Oberschwingung 48a hat eine Amplitude $A_{48a}$, die Oberschwingung b hat eine Amplitude $A_{48b}$.

Der gerade genannte physikalische Sachverhalt wird in der Verarbeitungseinrichtung 40 für die Durchführung eines Verfahrens ausgenutzt, welches nun unter Bezugnahme auf Figur 3 erläutert wird. Das Verfahren beginnt in einem Startblock 50. In einem Block 52 wird aus dem Signal 54 des Sensors 38 ein Klirrfaktor K bestimmt. Der Klirrfaktor K ist der Quotient aus der Summe der Amplituden $A_i$ der Oberwellen der Schwingung der Verdichterplatte 24 und der Amplitude A der Grundschwingung, entsprechend folgendem Zusammenhang:

$$K = \sqrt{\frac{\sum A_i^2}{A^2}}$$

Für das in Figur 2 dargestellte Beispiel ergibt dies folgenden Zusammenhang:

$$K = \sqrt{\frac{A_{48a}^2 + A_{48b}^2}{A_{46}^2}}$$

Anstelle des Klirrfaktors K könnte im Block 52 auch jede andere Größe ermittelt werden, welche sich mit dem Verdichtungszustand des Raumbereichs 34 verändert. Hierzu gehört beispielsweise auch eine Gesamte Harmonische Verzerrung.

Der ermittelte Klirrfaktor K wird in einem Block 56 mit einem Grenzwert $G_1$ verglichen. Ist der Klirrfaktor K kleiner als der Grenzwert $G_1$, erfolgt ein Sprung zu einem Block 58. Ist der Klirrfaktor K größer als oder gleich wie der Grenzwert $G_1$, erfolgt ein Sprung zu einem Block 60. Mit dem Vergleich im Block 56 wird erkannt, ob der Anbauverdichter 10 vom Baggerarm 11 auf den Boden 30 gedrückt wird, oder ob er vom Boden 30 abgehoben ist, also in einen sogenannten "Leerlaufbetrieb" ist. Ein solcher tritt beispielsweise auf, wenn der Anbauverdichter 10 von der Stelle 32 nach erfolgter Verdichtung zu einer benachbarten Stelle umgesetzt 32 wird, oder wenn er beispielsweise gereinigt wird.

Liegt der Anbauverdichter 10 mit der Verdichterplatte 24 nicht auf dem Boden 30 auf, gibt es praktisch keine relevanten Oberschwingungen 48i, bzw. deren

Amplituden $A_i$ sind nur sehr klein. Dies führt zu einem sehr kleinen Klirrfaktor K, was durch den Vergleich im Block 56 erkannt wird. Der Grenzwert $G_1$ ist also so gewählt, dass mit hoher Wahrscheinlichkeit ein Leerlaufbetrieb vorliegt. Beispielsweise liegt er im Bereich von 0,2. In diesem Fall wird dem Maschinenführer im Block 58 durch eine entsprechende Anzeigeeinrichtung einfach die aktuelle Schwingungsfrequenz der Verdichterplatte 24 angezeigt.

Liegt kein Leerlaufbetrieb vor, erfolgt im Block 60 die eigentliche Prüfung, ob die maximal mögliche Verdichtung des Raumbereichs 34 erreicht ist. Hierzu wird zunächst die zeitliche Abteilung dK/dt des Klirrfaktors K, also die zeitliche Veränderung des Klirrfaktors K ermittelt. Diese zeitliche Veränderung dK/dt wird dann mit einem Grenzwert $G_2$ verglichen. Ist die zeitliche Veränderung dK/dt größer als der Grenzwert, erfolgt ein Sprung zu dem bereits oben erwähnten Block 58. Ist die zeitliche Veränderung dK/dt dagegen kleiner als oder gleich wie der Grenzwert $G_2$, wird davon ausgegangen, dass die maximal mögliche Verdichtung des Raumbereichs 34 erreicht ist, und dies wird dem Maschinenführer im Block 62 durch eine entsprechende Ansteuerung der Anzeigelampe 42 optisch angezeigt. Zusätzlich oder alternativ könnte auch noch eine akustische Anzeige beispielsweise durch einen Signalton oder eine haptische Anzeige beispielsweise durch ein Vibrieren eines Bedienelements im Führerstand 44 erfolgen. Das Verfahren endet im Block 64.

Mit dem Vergleich im Block 60 hat es Folgendes auf sich: der Absolutwert des Klirrfaktors K hängt, bei konstanter Andrückkraft des Anbauverdichters 10 mittels des Baggerarms 11 auf den Boden 30 an der Stelle 32, unmittelbar mit dem aktuellen Verdichtungszustand des Raumbereichs 34 ab. Da sich dieser Verdichtungszustand während der erfolgenden Verdichtung ändert, ändert sich auch der Klirrfaktor K. Ist ein Zustand einer wenigstens im Wesentlichen maximal möglichen Verdichtung des Raumbereichs 34 erreicht, ändert sich die Dichte des Bodens innerhalb des Raumbereichs 34 nicht mehr, und somit ändert sich auch der Klirrfaktor K nicht mehr. In diesem Fall geht somit die zeitliche Ableitung dK/dt des Klirrfaktors K gegen Null. Dies wird durch den Vergleich mit dem Grenzwert $G_2$ erkannt, der daher sinnvollerweise so gewählt ist, dass er nahe Null ist.

**Patentansprüche**

1. Verfahren zum Betreiben eines Anbauverdichters (10) mit einem schwingenden Unterteil (24), wobei ein Ende einer möglichen Verdichtung durch ein entsprechendes Signal angezeigt wird (62), und wobei es folgende Schritte umfasst:

     a. Erfassen einer ersten Größe (46'), welche die Schwingungen des Unterteils (24) charakterisiert, wobei die erste Größe eine Amplitude und/oder eine Frequenz ist;

b. Ermitteln einer zweiten Größe (K), welche einen Verdichtungszustand eines Raumbereichs (34) charakterisieren kann, aus der im Schritt a erfassten ersten Größe (46'), wobei die zweite Größe sich mit dem Verdichtungszustand des Raumbereichs (34) verändert und insbesondere ein Klirrfaktor (K) oder eine Gesamte Harmonische Verzerrung oder eine diese Größen charakterisierende oder diesen Größen entsprechende Größe ist; **dadurch gekennzeichnet** durch die folgenden Schritte

c. Ermitteln einer dritten Größe (dK/dt), welche eine zeitliche Veränderung der im Schritt b ermittelten zweiten Größe (K) charakterisiert;

d. Vergleichen der im Schritt c ermittelten dritten Größe (dK/dt) mit einem Grenzwert ($G_2$); und

e. Veranlassen einer Aktion abhängig vom Ergebnis des Vergleichs.

2. Verfahren nach Anspruch 1, **dadurch gekennzeichnet, dass** im Schritt d die dritte Größe (dk/dt) mit einem Grenzwert ($G_2$) verglichen wird und im Schritt e dann, wenn der Grenzwert ($G_2$) erreicht und/oder unterschritten wird, ein von einem Benutzer wahrnehmbares Signal erzeugt wird (62).

3. Verfahren nach einem der vorhergehenden Ansprüche, **dadurch gekennzeichnet, dass** das Signal akustisch, optisch und/oder haptisch wahrnehmbar ist.

4. Verfahren nach einem der Ansprüche 2 oder 3, dass mindestens dann, wenn der Grenzwert ($G_2$) nicht erreicht wird, aus der ersten Größe (46') eine aktuelle Frequenz der Verdichterplatte (24) ermittelt und dem Benutzer angezeigt wird (58).

5. Verfahren nach einem der vorhergehenden Ansprüche, **dadurch gekennzeichnet, dass** es zusätzlich folgende Schritte umfasst: Vergleichen der im Schritt b ermittelten zweiten Größe (K) mit einem Grenzwert ($G_1$); Aussetzen der Verarbeitung der Schritte c bis e, solange die zweite Größe (K) kleiner ist als der Grenzwert ($G_1$).

6. Verfahren nach einem der vorhergehenden Ansprüche, **dadurch gekennzeichnet, dass** die zweite Größe (K) unter Verwendung einer Fourieranalyse ermittelt wird.

7. Speichermedium, **dadurch gekennzeichnet, dass** auf ihm ein Computerprogramm gespeichert ist, welches zur Ausführung eines Verfahrens nach einem der vorhergehenden Ansprüche programmiert ist.

8. Anbauverdichter (10) zum Ankuppeln an ein Tragfahrzeug (14), insbesondere einen Bagger, mit einem Exzenterantrieb (26) und einem schwingenden Unterteil (24), wobei er einen Sensor (38) aufweist, der eine die Schwingungen des Unterteils (24) charakterisierende Größe (46') erfasst, **dadurch gekennzeichnet, dass** der Sensor (38) ein entsprechendes Signal an eine Verarbeitungseinrichtung (40) leitet, welche das Signal entsprechend einem Verfahren eines der Ansprüche 1 bis 6 verarbeitet.

9. Anbauverdichter (10) nach Anspruch 8, **dadurch gekennzeichnet, dass** er einen Energieerzeuger zur Speisung mindestens des Sensors (38) aufweist, der mindestens mittelbar von einem hydraulischen Antriebsmotor, insbesondere dem des Exzenterantriebs (26), angetrieben wird, und/oder einen elektrischen Anschluss zum Anschluss an eine Energieversorgung des Tragfahrzeugs aufweist.

10. Anbauverdichter nach einem der Ansprüche 8 oder 9, **dadurch gekennzeichnet, dass** er eine drahtlose Signalübertragungseinrichtung aufweist, welche das Signal des Sensors an eine tragfahrzeugseitige Verarbeitungseinrichtung oder ein Signal der Verarbeitungseinrichtung an eine tragfahrzeugseitige Anzeigeeinrichtung übermittelt.

## Claims

1. A method for operating an attached compactor (10) having a vibrating lower part (24), wherein a completion of a possible compaction is indicated by a corresponding signal (62), said method comprising the steps of:

a. detecting a first variable (46') characterizing the vibrations of said lower part, wherein the first variable is an amplitude and/or a frequency;

b. determining a second variable (K), which can characterize a compaction state of a volume (34), from said first variable (46') recorded in step a; wherein the second variable varies with the compaction state of the volume (34) and particularly can be a distortion factor (K) or a Total Harmonic Distortion or a variable which characterizes these variables or which corresponds to these variables **characterized by** the following steps:

c. determining a third variable (dK/dt), which characterizes a temporal variation of said second variable (K) determined in step b;

d. comparing said third variable (dK/dt) determined in step c to a threshold value ($G_2$); and

e. initiating an action depending on the results of the comparison.

2. The method according to claim 1, **characterized in that** in step d said third variable (dK/dt) is compared to a threshold value ($G_2$), and then, in step e, when said third variable (dK/dt) reaches and/or falls below said threshold value ($G_2$), a signal perceivable by an operator is generated (62).

**3.** The method according to one of the preceding claims, **characterized in that** said signal is perceivable acoustically, visually and/or in a tactile manner.

**4.** The method according to one of the claims 2 or 3, **characterized in that** at least then, when said threshold value ($G_2$) is not reached, a current frequency of the compactor plate (24) is determined from said first variable (46') and indicated to said operator (58).

**5.** The method according to one of the preceding claims, **characterized in that** the method additionally comprises the following steps:

comparing said second variable (K) determined in step b to a threshold value ($G_1$);
suspending the processing of steps c to e as long as said second variable (K) is less than said threshold value ($G_1$).

**6.** The method according to one of the preceding claims, **characterized in that** said second variable (K) is determined using a Fourier analysis.

**7.** A storage medium, **characterized in that** a computer program is stored thereon, which is programmed to execute a method according to one of the preceding claims.

**8.** An attached compactor (10) for coupling to a supporting vehicle (14), in particular an excavator, comprising an eccentric drive (26) and a vibrating lower part (24), wherein said compactor includes a sensor (38), which detects a variable (46') characterizing the vibrations of said lower part (24), **characterized in that** said sensor (38) provides a corresponding signal to a processing device (40), which processes the signal in accordance with a method of one of the claims 1 to 6.

**9.** The attached compactor (10) according to claim 8, **characterized in that** said compactor comprises a power generator for supplying at least said sensor (38), which is powered, at least indirectly, by a hydraulic drive motor, in particular that of said eccentric drive (26), and/or has an electrical connection for connecting to a power supply of said supporting vehicle.

**10.** The attached compactor (10) according to claim 8 or 9, **characterized in that** said compactor has a wireless signal transmission device, which transmits the signal of the sensor to a supporting vehicle side processing device or transmits a signal of the processing device to a supporting vehicle side display device.

**Revendications**

**1.** Procédé de fonctionnement d'un compacteur adaptable (10) avec une partie inférieure (24) vibrante, dans lequel une fin d'un compactage éventuel est affichée (62) par un signal correspondant, et dans lequel il comprend les étapes suivantes :

a. détection d'une première grandeur (46') qui caractérise les vibrations de la partie inférieure (24), dans lequel la première grandeur est une amplitude et/ou une fréquence ;
b. détermination d'une deuxième grandeur (K), qui peut caractériser un état de compactage d'une zone d'espace (34), à partir de la première grandeur (46') détectée dans l'étape a, dans lequel la deuxième grandeur varie avec l'état de compactage de la zone d'espace (34) et est en particulier un facteur de distorsion (K) ou une distorsion harmonique globale ou une grandeur caractérisant ces grandeurs ou correspondant à ces grandeurs ; **caractérisé par** les étapes suivantes :
c. détermination d'une troisième grandeur (dK/dt) qui caractérise une variation dans le temps de la deuxième grandeur (K) déterminée dans l'étape b ;
d. comparaison de la troisième grandeur (dK/dt) déterminée dans l'étape c avec une valeur limite ($G_2$) ; et
e. lancement d'une action en fonction du résultat de la comparaison.

**2.** Procédé selon la revendication 1, **caractérisé en ce que**, dans l'étape d, la troisième grandeur (dk/dt) est comparée à une valeur limite ($G_2$) et, dans l'étape e, quand la valeur limite ($G_2$) est atteinte et/ou lors d'un passage sous cette valeur, un signal perceptible par un utilisateur est produit (62).

**3.** Procédé selon l'une des revendications précédentes, **caractérisé en ce que** le signal est perceptible de façon acoustique, optique et/ou par le toucher.

**4.** Procédé selon l'une des revendications 2 ou 3, **caractérisé en ce qu'**au moins quand la valeur limite ($G_2$) n'est pas atteinte, une fréquence actuelle de la plaque de compacteur (24) est déterminée à partir de la première grandeur (46') et affichée (58) à l'attention de l'utilisateur.

**5.** Procédé selon l'une des revendications précédentes, **caractérisé en ce qu'**il comprend en plus les étapes suivantes : comparaison de la deuxième grandeur (K) déterminée dans l'étape b avec une valeur limite ($G_1$) ;

interruption du traitement des étapes c à e tant que la deuxième grandeur (K) est inférieure à la valeur limite ($G_1$).

6. Procédé selon l'une des revendications précédentes, **caractérisé en ce que** la deuxième grandeur (K) est déterminée en utilisant une analyse de Fourier.

7. Support de mémoire, **caractérisé en ce qu'**un programme informatique y est enregistré et est programmé pour la réalisation d'un procédé selon l'une des revendications précédentes.

8. Compacteur adaptable (10) pour l'accouplement à un véhicule porteur (14), en particulier une excavatrice, avec un entraînement à excentrique (26) et une partie inférieure (24) vibrante, dans lequel il présente un capteur (38) qui détecte une grandeur (46') caractérisant les vibrations de la partie inférieure (24), **caractérisé en ce que** le capteur (38) conduit un signal correspondant vers un système de traitement (40) qui traite le signal conformément à un procédé d'une des revendications 1 à 6.

9. Compacteur adaptable (10) selon la revendication 8, **caractérisé en ce qu'**il présente un générateur d'énergie pour l'alimentation d'au moins le capteur (38), lequel générateur est entraîné au moins de façon indirecte par un moteur d'entraînement hydraulique, en particulier celui de l'entraînement à excentrique (26), et/ou qu'il présente une connexion électrique pour la connexion à une alimentation en énergie du véhicule porteur.

10. Compacteur adaptable selon l'une des revendications 8 ou 9, **caractérisé en ce qu'**il présente un système de transmission de signaux sans fil qui transmet le signal du capteur à un système de traitement côté véhicule porteur ou un signal du système de traitement à un système d'affichage côté véhicule porteur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009018490 A1
- DE 102008006211 A1
- DE 20307434 U1
- US 5695298 A
- DE 102008010461 A1
- DE 202004015141 U1